# EUROPÄISCHE PATENTSCHRIFT

(11) **EP 1 178 265 B1**
(45) Veröffentlichungstag und Bekanntmachung des Hinweises auf die Patenterteilung: **12.11.2003**
(21) Anmeldenummer: 00128673.1
(22) Anmeldetag: 29.12.2000
(51) Int. Cl.: F24C 15/10, H05B 3/74

(54) **Glaskeramikplatte**
Glass ceramic plate
Plaque en vitrocéramique

(30) Priorität: 11.01.2000 DE 10000657
(43) Veröffentlichungstag der Anmeldung: 06.02.2002
(73) Patentinhaber: Schott Glas, 55122 Mainz (DE); BSH Bosch und Siemens Hausgeräte GmbH, 81669 München (DE); CARL-ZEISS-STIFTUNG trading as Schott Glas, 55122 Mainz (DE)
(72) Erfinder: Kosmas, Ioannis, Dr., 55270 Essenheim (DE); Wennemann, Dietmar, 55234 Albig (DE); Grützke, Joachim, 74374 Zaberfeld (DE)
(74) Vertreter: Gaiser, Hartmut, Dipl.-Ing.

(56) Entgegenhaltungen:
- DE-U- 8 801 334
- US-A- 5 261 387
- US-A- 6 103 338

## Beschreibung

Die Erfindung betrifft eine Glaskeramikplatte für einen Kochherd oder ein Grillgerät.

Eine derartige Glaskeramikplatte ist in der EP 0 231 529 B1 beschrieben. Durch statistisch verteilte Überhöhungen der Oberfläche ist erreicht, dass durch verschobene Kochtöpfe und/oder durch Reinigungsmittel eine Dekorbeschichtung nicht in einer optisch störenden Weise abgerieben und verkratzt wird.

Aus der DE 34 33 880 A1 ist eine Glaskeramikplatte bekannt, deren Dekor-Beschichtung in der Umgebung jeder Kochzone der Glaskeramikplatte sichtbar unterbrochen ist, um aus einem Kochgeschirr übergelaufenes, eingebranntes Kochgut ohne Beschädigung der Dekor-Beschichtung abschaben zu können. Die Unterbrechung ist zwangsläufig nicht tiefer als die Dekorschichtdicke. Sie kann also nur sehr kleine Mengen von übergelaufenen Kochgut aufnehmen.

Im DE-GM 70 14 047 ist eine Grill- und Bratvorrichtung beschrieben, bei der eine Fett-Sammelrinne um eine Stahlplatte umläuft. Die Fettrinne ist durch an die Stahlplatte angeschweißte U-Profile gebildet. Bei Glaskeramikplatten ist diese Gestaltung nicht einsetzbar.

An der Unterseite von Glaskeramikplatten von Kochherden sind nach dem Stand der Technik oft neben den Kochzonen auch Anzeigeelemente und/oder Bedienelemente vorgesehen, die durch die Glaskeramikplatte hindurch sichtbar oder aktivierbar sind.

In der DE 295 19 714 U1 ist ein Bedienungselement an einer dielektrischen Platte, speziell Glaskeramikplatte, eines Haushaltsgeräts beschrieben. Einer Abgriffselektrode gegenüber ist die Platte mit einer dickenreduzierenden fingerkuppengroßen Einformung versehen. Dadurch ist es möglich, mit einer Fingerkuppe eine steuerungswirksame Bedienposition auch ohne Hinsehen zu finden. Eine Abgrenzung von Funktionszonen ist durch die abweichende Plattenstärke nicht erreicht.

Eine Glaskeramikplatte gem. Oberbegriff von Anspruch 1 ist aus der US-A-5 261 387 bekannt.

Aufgabe der Erfindung ist es, bei einer Glaskeramikplatte der eingangs genannten Art verschiedene Zonen optisch und tastbar voneinander abzugrenzen.

Erfindungsgemäß wird obige Aufgabe durch die Merkmale im kennzeichnenden Teil gelöst.

Die Vertiefung hat den Vorteil, dass sie einzelne Zonen voneinander optisch abgrenzt, was dem Benutzer die Orientierung auf der Glaskeramikplatte erleichtert. Dadurch kann eine Dekorbeschichtung der Glaskeramikplatte ganz oder teilweise entfallen.

Die Vertiefungen sind für den Benutzer fühlbar, so dass er auch bei schlechten Sichtverhältnissen bestimmte Zonen finden kann.

Bei den Vertiefungen ist auch vorteilhaft, dass sie aus Kochgeschirr übergelaufenes Kochgut aufnehmen, so dass dieses nicht unmittelbar in benachbarte Zonen fließt. Die Vertiefungen sind auch leicht mittels eines Schabers zu reinigen, der insbesondere ein dem Querschnittsprofil entsprechendes Profil aufweist.

Da die Vertiefungen poliert sind, bilden sie einen deutlichen optischen Kontrast gegenüber der Glaskeramikplatte im übrigen. Die Polierung erleichtert auch das Reinigen der Vertiefungen.

Vorteilhafte Ausgestaltungen der Erfindung ergeben sich aus den Unteransprüchen und der folgenden Beschreibung von Ausführungsbeispielen. In der Zeichnung zeigen:
Figur 1a die Aufsicht auf eine Glaskeramikplatte mit einer umlaufenden rillenförmigen Vertiefung,
Figur 1b einen Schnitt längs der Linie A-A der Figur 1a, vergrößert,
Figur 2a eine Aufsicht einer Glaskeramikplatte mit um einzelne Kochzonen umlaufenden rillenförmigen Vertiefungen,
Figur 2b einen Schnitt längs der Linie A-A der Figur 2a, vergrößert,
Figur 3a eine Aufsicht einer Glaskeramikplatte mit einer gebogt, rillenförmigen Vertiefung,
Figur 3b einen Schnitt längs der Linie A-A der Figur 3a,
Figur 4 die Aufsicht einer Glaskeramikplatte mit einer ovalen, rillenförmigen Vertiefung,
Figur 5 die Aufsicht einer Glaskeramikplatte mit einer linearen, rillenförmigen Vertiefung,
Figur 6a die Aufsicht einer Glaskeramikplatte mit zwei ringförmigen, rillenförmigen Vertiefungen,
Figur 6b einen Schnitt längs der Linie A-A der Figur 6a, vergrößert,
Figur 7a eine Aufsicht einer Glaskeramikplatte mit zwei kreisförmigen Einformungen,
Figur 7b einen Schnitt längs der Linie A-A der Figur 7a,
Figur 8 verschiedene Querschnittsprofile der rillenförmigen Vertiefung.

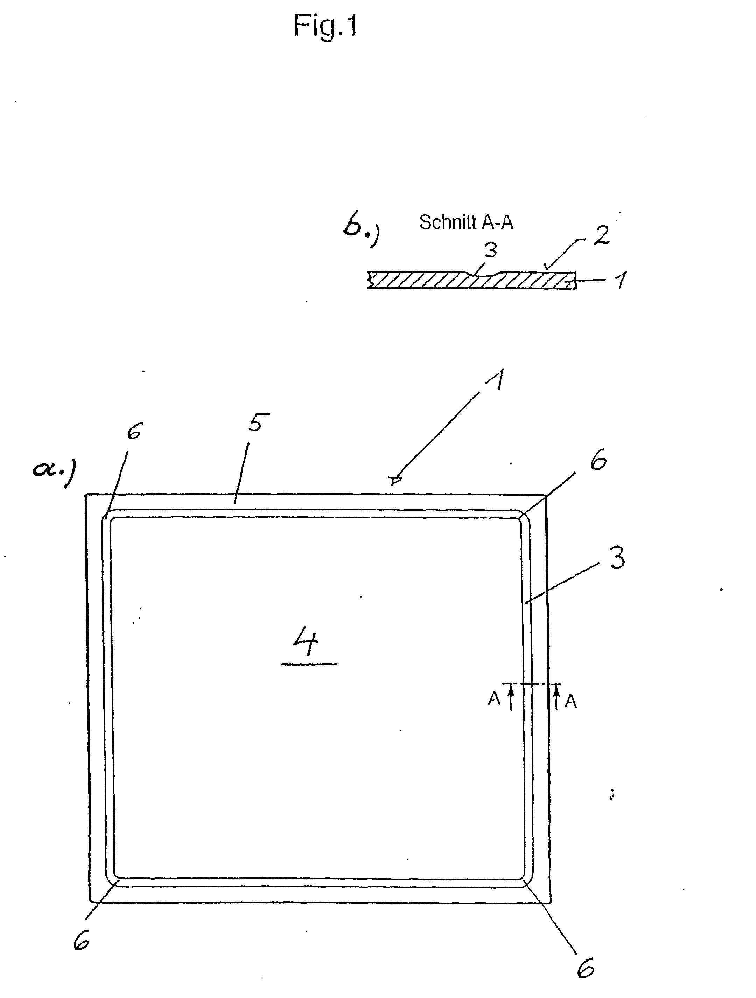

Eine Glaskeramikplatte 1 eines Kochherdes ist an ihrer sichtseitigen Oberfläche 2, auf die Kochgeschirr zu stellen ist, mit wenigstens einer rillenförmigen Vertiefung 3 versehen. Die Vertiefung 3 hat eine Breite von beispielsweise 5mm bis 30mm. Ihre Tiefe beträgt beispielsweise 0,3mm bis 1,5mm. Mögliche Querschnittsprofile der Vertiefung 3 ergeben sich aus Figur 1b, 2b, 3b, 6b, 7b und Figur 8.

Die Vertiefung 3 wird beispielsweise durch Schleifen hergestellt, nachdem die Glaskeramikplatte 1 einen Keramisierungsprozess durchlaufen hat. Anschließend wird die Vertiefung 3 poliert.

Bei der Glaskeramikplatte 1 nach Figur 1 läuft die rillenförmige Vertiefung 3 um eine Innenzone 4 um, in der nicht näher dargestellte Kochzonen vorgesehen sind. Sie trennt dadurch die Innenzone 4 von einer Randzone 5. An der Randzone 5 ist die Glaskeramikplatte 1 in einen Halterungsrahmen einspannbar, der die Vertiefung 3 freilässt.

An den vier Ecken 6 ist die rillenförmige Vertiefung 3 gerundet. Läuft Kochgut aus einem Kochgeschirr über, dann kann sich dieses in der rillenförmigen Vertiefung 3 sammeln. Eine Reinigung der Vertiefung 3 ist durch einfaches Wischen möglich. Wenn das Kochgut in der Vertiefung 3 schon festgebrannt ist, lässt es sich mit einem Schaber entfernen, der vorzugsweise das Profil der Vertiefung 3 hat.

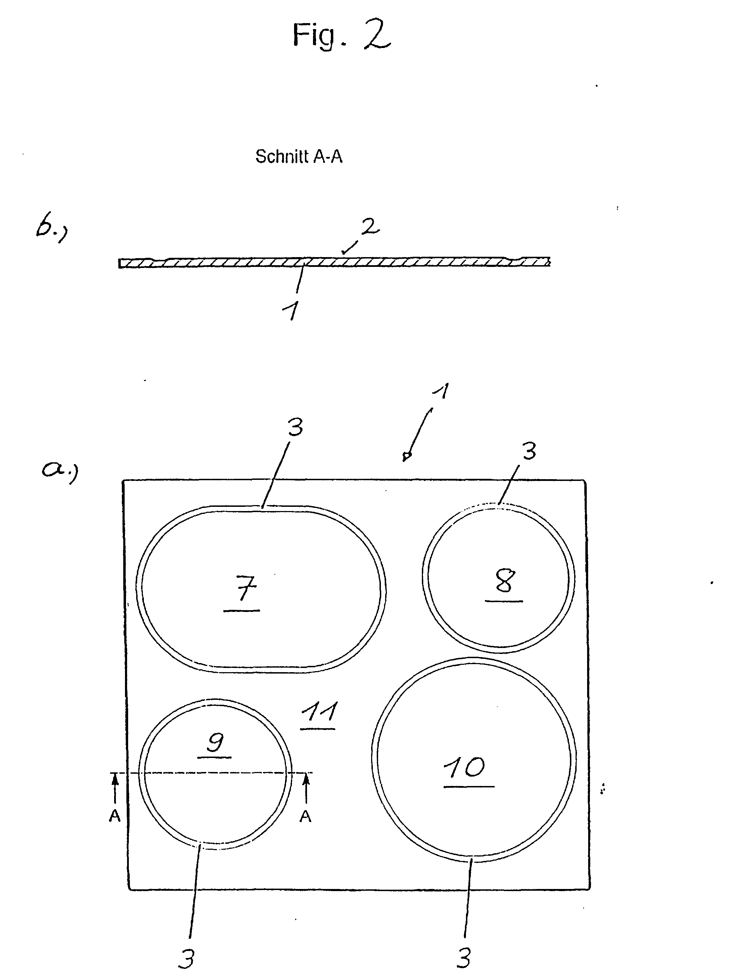

Bei der Ausführung nach Figur 2 läuft je eine rillenförmige Vertiefung 3 um jede der vier Kochzonen 7,8,9,10 der Glaskeramikplatte 1 um. Dadurch sind die vier Kochzonen 7,8,9,10 voneinander abgegrenzt. Der Benutzer erkennt die Kochzonen und kann somit das Kochgeschirr richtig aufsetzen. Eine Dekorbeschichtung der Glaskeramikplatte 1, um die Kochzonen 7,8,9,10 kenntlich zu machen, ist nicht notwendig.

Die rillenförmigen Vertiefungen nehmen in der Umgebung jeder Kochzone etwa überlaufendes Kochgut auf, so dass dieses nicht direkt in eine Zwischenzone 11 fließt und dort etwa vorgesehene Anzeige- und/oder Bedienelemente stört.

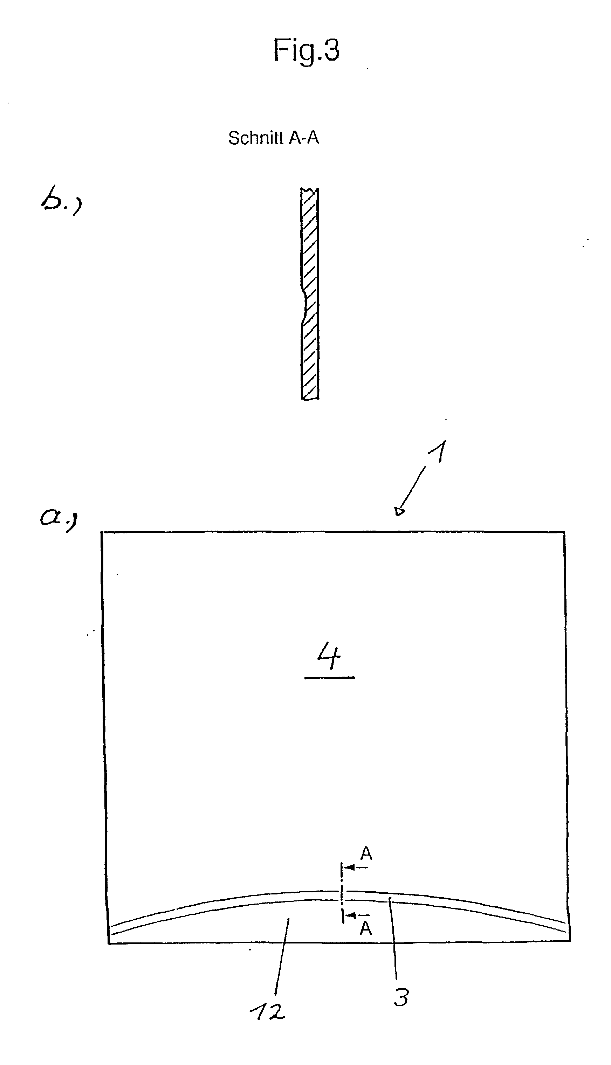

Bei der Ausführung nach Figur 3 ist die Innenzone 4, in der die Kochzonen vorgesehen sind, durch eine rillenförmige Vertiefung 3 von einer Frontzone 12 getrennt. Die rillenförmige Vertiefung 3 verläuft in einem Bogen von dem einen seitlichen Rand zum anderen seitlichen Rand der Glaskeramikplatte 1. In der Frontzone 12 können Anzeige- oder Bedienelemente vorgesehen sein. Die rillenförmige Vertiefung 3 sammelt etwa überlaufendes Kochgut, bevor es in die Frontzone 12 fließen kann. Der Benutzer erkennt durch die von der rillenförmigen Vertiefung 3 gebildete Abgrenzung, wo die Anzeige- und Bedienelemente liegen, ohne dass hierfür eine besondere Dekorbeschichtung nötig ist.

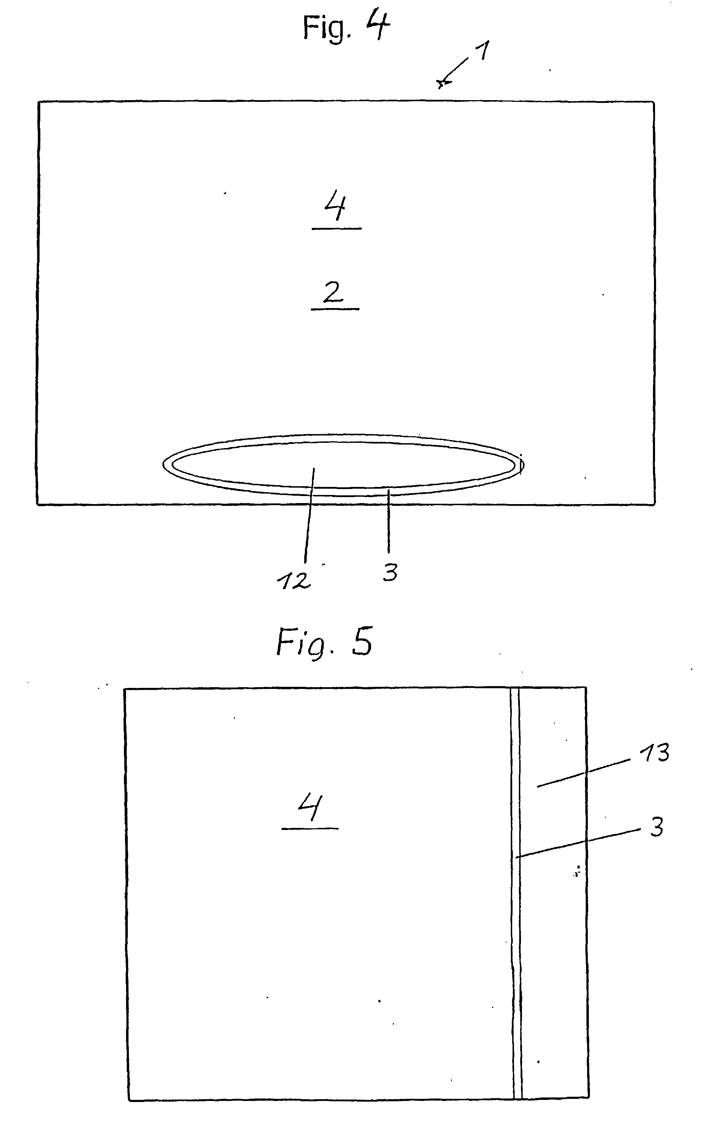

Beim Ausführungsbeispiel nach Figur 4 bildet die rillenförmige Vertiefung 3 ein geschlossenes Oval, das die Frontzone 12 umgrenzt, in oder unter welcher Anzeigeund/oder Bedienelemente angeordnet sind. Durch die Umgrenzung erkennt der Benutzer die Lage dieser Elemente. Die rillenförmige Vertiefung 3 sammelt überlaufendes Kochgut, bevor es in die Frontzone 12 fließen kann.

Bei der Ausführung nach Figur 5 ist die Innenzone 4 durch eine gerade, rillenförmige Vertiefung 3 von einer Seitenzone 13 abgegrenzt. In der Seitenzone 13 sind Anzeige- und/oder Bedienelemente angeordnet. Die rillenförmige Vertiefung 3 hat die anhand der Figuren 3 und 4 oben beschriebene Wirkung.

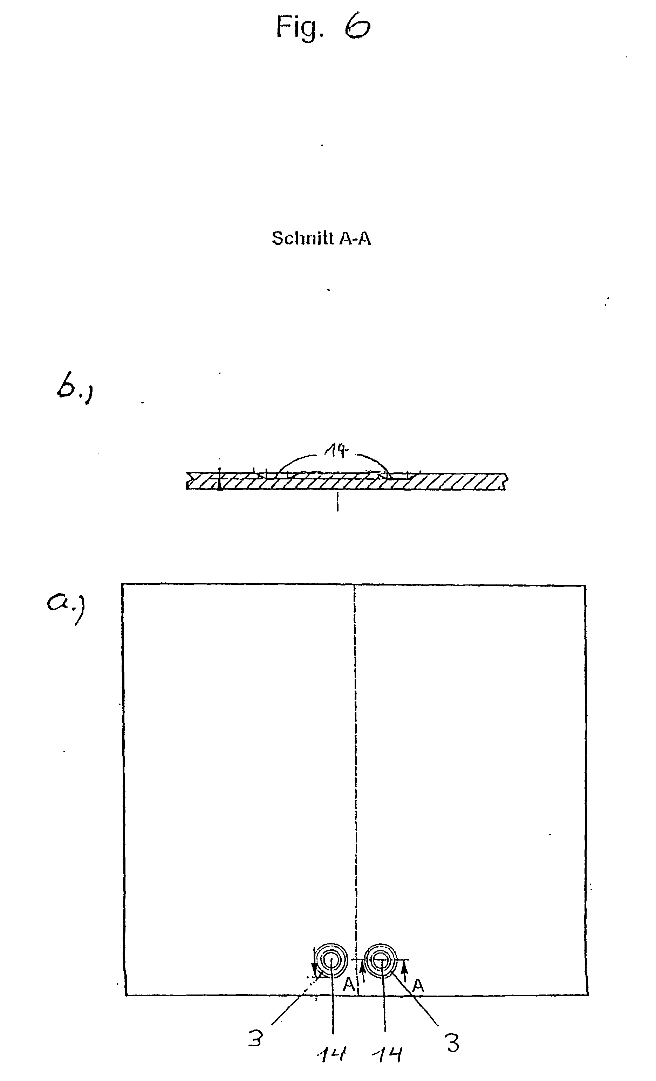

In Figur 6 sind zwei rillenförmige Vertiefungen 3 gezeigt, die ringförmig je eine Bedien- oder Anzeigezone 14 umgrenzen. Die Bedien- oder Anzeigezone 14 hat einen Durchmesser von etwa 15mm bis 20mm. Unterhalb der Glaskeramikplatte 1 ist im Bereich der Bedien- oder Anzeigezone 14 ein Bediensensor oder ein Anzeigeelement anzuordnen. Aufgrund der ringförmigen Vertiefung 3 erkennt der Benutzer die Lage der Bedienzone 14 sowohl optisch als auch taktil, so dass er die Bedienzone 14 findet. Die Vertiefung 3 kann überlaufendes Kochgut aufnehmen. Die Bedienzone 14 ist durch die Vertiefung 3 deutlich von der Umgebung abgegrenzt, wodurch die Erkennbarkeit des Anzeigeelements verbessert ist.

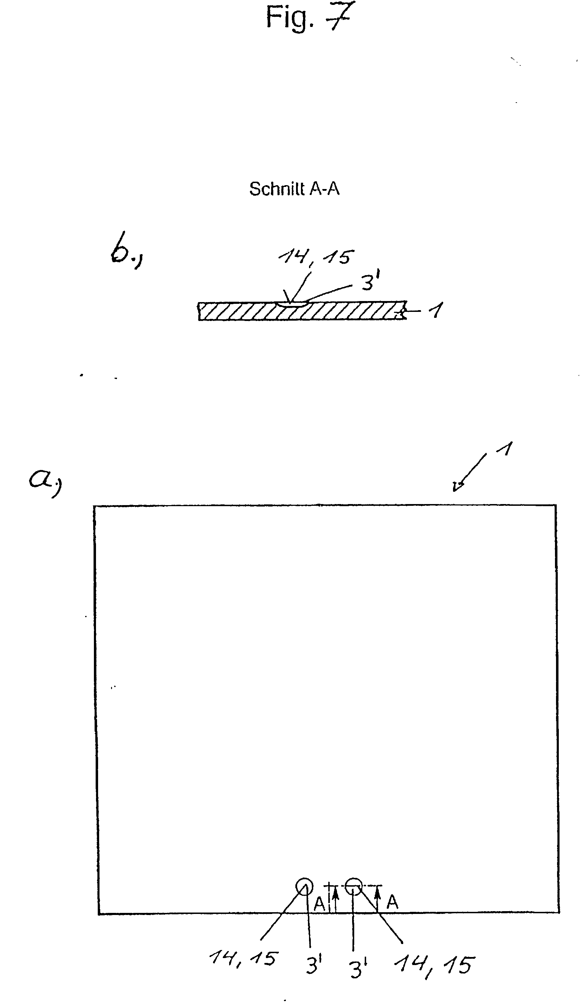

Das Ausführungsbeispiel der Figur 7 ist hinsichtlich des Einsatzzweckes dem Ausführungsbeispiel nach Figur 6 ähnlich. In Figur 7 sind an der Glaskeramikplatte 1 zwei kreisförmige Einformungen 3' gezeigt, die zusätzlich zu den genannten rillenförmigen Vertiefungen 3 vorgesehen sein können. Deren Grund 15 bildet eine Bedien- oder Anzeigezone 14. Unter dem Grund 15 - an der Unterseite der Glaskeramikplatte 1 - ist jeweils ein Bedienund/oder Anzeigeelement anzuordnen. Auch hier findet der Benutzer die Anzeige- bzw. Bedienzone 14 leicht, sei es optisch und/oder taktil.

Bei der Ausführung nach Figur 7 könnte überlaufendes Kochgut auf den Grund 15 fließen, was unerwünscht ist, weil dort durch Fingerberührung ein Bediensensor aktiviert werden soll oder ein Anzeigeelement sichtbar sein soll. Um zu vermeiden, dass überlaufendes Kochgut in die kreisförmigen Einformungen 3' der Figur 7 fließt, kann die Glaskeramikplatte 1 eine zusätzlich mit einer oder mehreren rillenförmigen Vertiefungen 3 versehen sein, wie sie oben beschrieben sind.

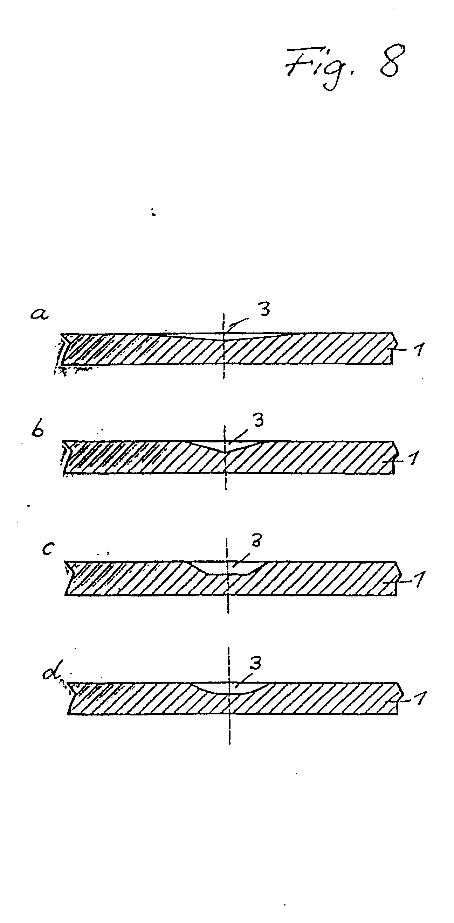

Die Figur 8 zeigt verschiedene Querschnittsprofile der Vertiefungen. In Figur 8a ist ein flaches V-Profil gezeigt. Figur 8b zeigt ein tiefes V-Profil. Figur 8c zeigt ein Flachprofil mit geschrägten Rändern. In Figur 8d ist ein C-förmiges Profil gezeigt. Es bestehen zahlreiche Möglichkeiten für die Gestaltung des Querschnittprofils der Vertiefung. Bei der Gestaltung des Querschnittprofils und der Polierung der Vertiefung 3 ist darauf geachtet, dass die Glaskeramikplatte 1 nicht bruchgefährdet wird.

Weitere Ausführungsbeispiele ergeben sich durch Kombinationen der in obigen Ausführungsbeispielen beschriebenen Möglichkeiten.

## Patentansprüche

1. Glaskeramikplatte für einen Kochherd oder ein Grillgerät, wobei Zonen durch wenigstens eine an der Oberfläche der Glaskeramikplatte ausgebildete Vertiefung voneinander getrennt sind,
**dadurch gekennzeichnet,**
**dass** die Vertiefung (3) zur Aufnahme von überlaufendem Kochgut rillenförmig ist und eine Tiefe von 0,3 mm bis 1,5 mm und eine Breite von 5 mm bis 30 mm aufweist und dass die Vertiefung poliert ist.

2. Glaskeramikplatte nach Anspruch 1,
**dadurch gekennzeichnet,**
**dass** die Vertiefung (3) in die Oberfläche (2) der Glaskeramikplatte (1) geschliffen ist.

3. Glaskeramikplatte nach einem der vorhergehenden Ansprüche,
**dadurch gekennzeichnet,**
**dass** wenigstens eine Vertiefung (3) eine Innenzone (4) der Glaskeramikplatte (1) von einer Randzone (5) und/oder einer Frontzone (12) und/oder einer Seitenzone (12) der Glaskeramikplatte (1) abgrenzt.

4. Glaskeramikplatte nach Anspruch 3,
**dadurch gekennzeichnet,**
**dass** der Randzone (5), der Frontzone (12) und/oder der Seitenzone (13) Bedien- und/oder Anzeigeelemente zugeordnet sind.

5. Glaskeramikplatte nach einem der vorhergehenden Ansprüche,
**dadurch gekennzeichnet,**
**dass** jeweils um eine Kochzone (7,8,9,10) der Glaskeramikplatte (1) wenigstens eine rillenförmige Vertiefung (3) umläuft.

6. Glaskeramikplatte nach einem der vorhergehenden Ansprüche,
**dadurch gekennzeichnet,**
**dass** wenigstens eine rillenförmige Vertiefung (3) um eine Anzeige- oder Bedienzone (14) der Glaskeramikplatte (1) umläuft.

7. Glaskeramikplatte nach einem der vorhergehenden Ansprüche,
**dadurch gekennzeichnet,**
**dass** zusätzlich zur rillenförmigen Vertiefung (3) wenigstens eine kreisförmige Einformung (3') vorgesehen ist, deren vertiefter Grund (15) eine Anzeige- oder Bedienzone (14) bildet.

8. Glaskeramikplatte nach einem der vorhergehenden Ansprüche,
**dadurch gekennzeichnet,**
**dass** das Querschnittsprofil der Vertiefung (3) V-förmig oder U-förmig oder C-förmig geformt ist.

## Claims

1. Glass-ceramic panel for a stove or grill, areas being separated from one another by at least one depression formed in the surface of the glass-ceramic panel, **characterized in that** the depression (3), for trapping overflowing food, is in the form of a channel and has a depth of 0.3 mm to 1.5 mm and a width of 5 mm to 30 mm, and **in that** the depression is polished.

2. Glass-ceramic panel according to Claim 1, **characterized in that** the depression (3) is ground into the surface (2) of the glass-ceramic panel (1).

3. Glass-ceramic panel according to one of the preceding claims, **characterized in that** at least one depression (3) delimits an inner area (4) of the glass-ceramic panel (1) from a border area (5) and/or a front area (12) and/or a side area (12) [sic] of the glass-ceramic panel (1).

4. Glass-ceramic panel according to Claim 3, **characterized in that** the border area (5), the front area (12) and/or the side area (13) are/is assigned operating and/or display elements.

5. Glass-ceramic panel according to one of the preceding claims, **characterized in that** at least one channel-like depression (3) runs around a respective cooking area (7, 8, 9, 10) of the glass-ceramic panel (1).

6. Glass-ceramic panel according to one of the preceding claims, **characterized in that** at least one channel-like depression (3) runs around a display or operating area (14) of the glass-ceramic panel (1).

7. Glass-ceramic panel according to one of the preceding claims, **characterized in that** at least one circular recess (3') is provided in addition to the channel-like depression (3), the sunken base (15) of said recess forming a display or operating area (14).

8. Glass-ceramic panel according to one of the preceding claims, **characterized in that** the cross-sectional profile of the depression (3) is V-shaped or U-shaped or C-shaped.

## Revendications

1. Plaque vitrocéramique pour une cuisinière ou un grill comportant des zones séparées les unes des autres par au moins une empreinte formée sur la surface de la plaque vitrocéramique, **caractérisée en ce que** l'empreinte (3) a la forme d'une rainure, présente une profondeur de 0,3 mm à 1,5 mm et une largeur de 5 mm à 30 mm et que l'empreinte est polie.

2. Plaque vitrocéramique selon la revendication 1, **caractérisée en ce que** l'empreinte (3) est meulée dans la surface (2) de la plaque vitrocéramique (1).

3. Plaque vitrocéramique selon une des revendications précédentes, **caractérisée en ce qu'**au moins une empreinte (3) délimite une zone intérieure (4) de la plaque vitrocéramique (1) d'une zone de bord (5) et/ou d'une zone frontale (12) et/ou d'une zone latérale (12) de la plaque vitrocéramique (1).

4. Plaque vitrocéramique selon la revendication 3, **caractérisée en ce que** des éléments de commande et/ou d'affichage sont attribués à la zone de bord (5), à la zone frontale (12) et/ou à la zone latérale (13).

5. Plaque vitrocéramique selon une des revendications précédentes, **caractérisée en ce qu'**au moins une empreinte (3) en forme de rainure entoure chacune des zones de cuisson (7, 8, 9, 10) de la plaque vitrocéramique (1).

6. Plaque vitrocéramique selon une des revendications précédentes, **caractérisée en ce qu'**au moins une empreinte (3) en forme de rainure entoure une zone d'affichage ou de commande (14) de la plaque vitrocéramique (1).

7. Plaque vitrocéramique selon une des revendications précédentes, **caractérisée en ce qu'**en plus de l'empreinte (3) en forme de rainure, au moins une moulure (3') circulaire est prévue dont le fond (15) creux forme une zone d'affichage ou de commande (14).

8. Plaque vitrocéramique selon une des revendications précédentes, **caractérisée en ce que** le profil de section de l'empreinte (3) a la forme d'un V, d'un U ou d'un C.
